# EUROPEAN PATENT SPECIFICATION

(11) **EP 0 554 599 B1**
(45) Date of publication and mention of the grant of the patent: **20.03.1996**
(21) Application number: 92303222.1
(22) Date of filing: 10.04.1992
(51) Int. Cl.: F16B 37/06

(54) **Pierce nut**
Stanzmutter
Ecrou de perçage

(30) Priority: 28.01.1992 JP 12639/92
(43) Date of publication of application: 11.08.1993
(73) Proprietor: AOYAMA SEISAKUSHO CO., LTD., Niwa-gun, Aichi-ken (JP)
(72) Inventor: Kazino, Hiroshi, Komaki-shi, Aichi-ken (JP)
(74) Representative: Watkins, David

(56) References cited:
- GB-A- 2 161 571
- JP-A- 4 314 770
- US-A- 3 276 499
- US-A- 3 282 315
- US-A- 3 810 291
- US-A- 3 927 465

## Description

### BACKGROUND OF THE INVENTION

The present invention relates to a pierce nut whose body is pressed against a sheet metal panel and clinched to the periphery of a pierced hole.

Recently, instead of a weld nut, which requires welding facilities and does not yield good finishing, a pierce nut becomes popular. A pierce nut is designed such that its nut body is pressed against a sheet metal panel placed on a bottom die (drag) to pierce its own hole which follows the internal threaded bore of the nut body in the metal panel, and at the same time the nut body is clinched to the periphery of the pierced hole. As disclosed in Examined Japanese Patent Publication No. 43-14770, it is considered most preferable that a pierce nut have an external projected collar and an internal projected collar with an end surface projecting further from the external projected collar, both projected collars provided on the bottom surface of a polygonal nut body having an internally threaded bore formed, and the pierce nut having a groove formed between the collars.

Since this type of a nut body is polygonal, however, specially designed dies are necessary for pressure forming, increasing the cost, and great pressing force is required for clinch installation. Further, the clinching in the groove is not sufficiently strong that this nut is not reliably used at a spot where a large load is applied.

A cylindrical pierce nut is known from United States Patent No. 3,927,465 in which projecting collars are of the same length, the outer collar having an inclined inner wall provided with notch formations for resisting torque. The disadvantages of this known pierce nut are that high forces are required to achieve effective installation and the concentration of stresses caused by the torque-resisting formations. It is therefore unsuitable for use where high loads are applied.

### SUMMARY OF THE INVENTION

It is an object of the present invention to provide a pierce nut which does not have the aforementioned shortcomings of the conventional pierce nut, and which can be pressure-formed from a coil rod very easily, ensuring reduction of the manufacturing cost, requires little pressing force at the time of clinch installation, and provides sufficient clinching strength so that the pierce nut can reliably be used at a spot where a large load is applied.

A pierce nut according to the present invention comprises a cylindrical nut body having an internally threaded bore formed therein;
an external annular projection extending longitudinally from an end of the body and having an inner surface formed as an inclined side wall conically tapered outward and having turning-preventing formations;
an internal cylindrical projection extending longitudinally from an end of the body and with an end surface projecting further than an end of the external projection; and
an annular groove provided between the projections and on a bottom surface of the cylindrical nut body;
in which nut said turning-preventing formations formed on the external projection are constituted by a continuous ring of serrations of V-shaped cross-section longitudinally extending along the inclined side wall from the mouth of said annular groove.

### BRIEF DESCRIPTION OF THE DRAWINGS

Fig. 1 is a vertical cross section of one embodiment according to the present invention;
Fig. 2 is a bottom view illustrating the embodiment of the present invention; and
Fig. 3 is a diagram illustrating procedures for pressing a pierce nut according to this embodiment against a sheet metal to be clinched thereto.

### DETAILED DESCRIPTION OF THE PREFERRED EMBODIMENT

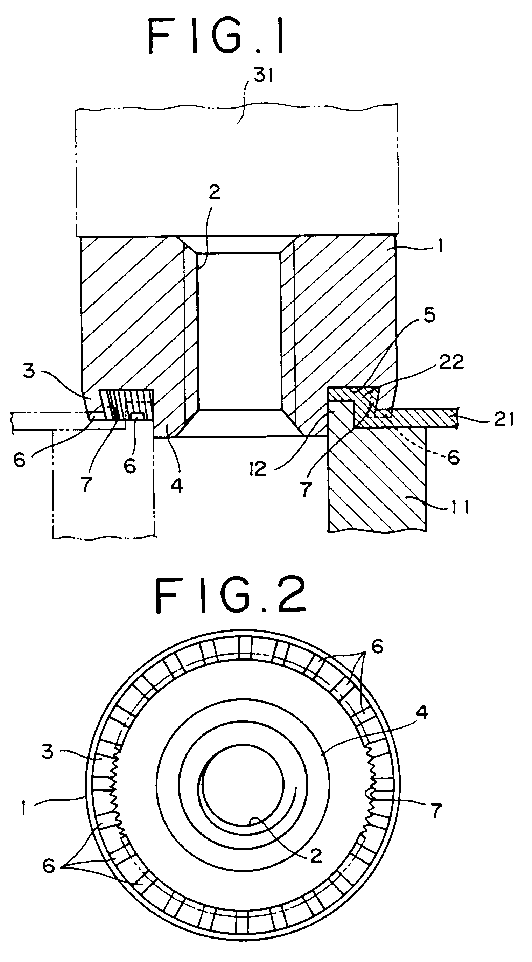

A preferred embodiment of the present invention will now be described referring to Figs. 1 and 2.

A cylindrical nut body 1 has an internally threaded bore 2 formed therein. External and internal annular projections 3 and 4 are provided on the bottom surface of the nut body 1 with an annular groove 5 in between. The end of the internal cylindrical projection (4) is located inside of the annular groove 5, and is further projecting out than the end of the external projection (3). Notches (or slits) 6 are formed radially on the bottom surface of the end of the external projection 3. The inner surface of the external projection 3 is formed to an inclined side wall 7 which has vertically-extending serrations with a V-shaped cross section and is conically tapered outward at about 15 degrees to the axis of the internally threaded bore 2.

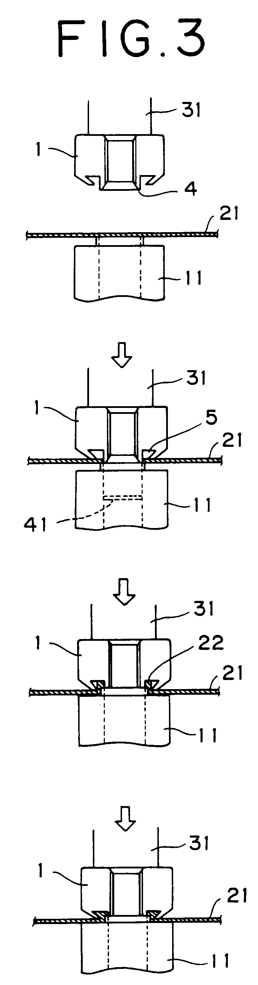

The action of pressing the pierce nut 1 according to this embodiment against a metal plate 21 to secure the pierce nut to the panel 21 will now be explained referring to Figs. 1 and 3.

The sheet metal panel 21 is set on a cylindrical bottom die 11 having an annular collar 12 at the top end of the bore periphery, and, a pierce nut 1 is pressed downward by a punch 31. The sheet metal panel 21 is then sheared out by the internal cylindrical projection 4 and the cylindrical bottom die 11, providing a pierced hole. At the same time, while being deformed, the periphery of the pierced hole is forced into the annular groove 5 between the internal cylindrical projection 4 and the external projection 3 on the bottom of the nut body 1, thereby forming an upstanding portion 22. In this invention, particularly, the inner surface of the external projection 3 is formed as an inclined side wall 7, which has longitudinally extending formations in the form of serrations having a V-shaped cross-section. Wall 7 is conically tapered outward, so that the hole periphery pushed into the annular groove 5 will easily engage with the serrations. The radially extending notch 6, formed on the bottom surface of the external projection 3, also eat into the surface of the sheet metal panel 21 to serve as a turning-preventing means. The pierce nut can therefore endure great rotational torque.

The preferable angle of the inclined side wall 7 is between 10° and 30°. The inclined side wall 7 if having an inclination angle of less than 10° will decrease the clinching strength of the nut. The inclined side wall 7 if inclined at an angle of over 30° will make the pressing of the nut difficult. It is particularly preferable that this inclination angle range from 15° to 20°. The notches (6) on the bottom surface of the external cylindrical projection 3 are not always necessary, though they contribute to prevention of the nut from turning.

As indicated above, the serrations on the inner surface of the external projection 3 are V-shaped in cross-section and preferably have an included angle of 30 to 90°; 50 to 70° is more desirable. In the case of an M6 thread, the height of its serrations is preferably about 0.2 to 0.4. The above-described shape and height of the serrations are taken into consideration in the light of the turning-preventing effect and the endurance of the pressure-forming die for nut's production.

Materials for a nut are not particularly limited; for example, a carbon steel (JIS S10C, S20C, etc.) or a stainless steel can be used for the nut. JIS S20C can be made stronger by heat treatment (quenching and tempering). The method of manufacturing a nut is not particularly limited, either. For example, the nut may be produced in the processes of wire-rod cutting, cold heading, hole forming, and tapping.

In Fig. 1, the outer surface of the external projection 3 is conically tapered outward because such is preferable for a pressure forming process; however, this surface should not necessarily be inclined. The internally threaded bore 2 has a rather large bottom chamfer in Fig. 1 for an easy entrance of the incomplete thread of a bolt. The length of this incomplete thread is generally about twice the pitch of a thread. The amount of the end projection of the internal cylindrical projection 4 over the external projection 3 can be determined as needed in accordance with the thickness of the sheet metal 21.

A more specific embodiment of the pierce nut according to the present invention will now be explained. Prepared was a pierce nut having the nut body 1 of 14.5 mm, the internal cylindrical projection 4 of 8.5 mm in outer diameter, the annular groove 5 of 3.2 mm wide and 1.1 mm deep, 36 serrations, 24 notches 6, and the inclined side wall 7 having an inclination angle of 15 degrees to the axis of the internally threaded bore 2. When the pierce nut was pressed against a JIS SPC steel plate (T.S. 28 kgf/mm) of 1.6 mm thick, yielding excellent clinching strength: clinching force of 380 kg and endurance rotational torque of 295 kg-cm. It was confirmed that the pierce nut according to this embodiment had greater clinching force by about 100 kg and larger rotational torque by 100 kg-cm, compared with a pierce nut which has no serrations in its inclined side wall 7 conically tapered outward and no notches on the bottom surface of its external projection 3. It is apparent that the present pierce nut can reliably be used at a portion where much load is applied.

As apparent from the foregoing description of the embodiment, according to the present invention, the pierce nut ensures greater clinching strength as long as the inner surface of the external projection is formed to be the inclined side wall which has vertically-extending serrations and is conically tapered outward. The pierce nut of the present invention can reliably be used at a portion where a large load is applied. Further, since the nut body is formed cylindrical, the pierce nut can be mass-produced easily from a coil rod with an inexpensive die, and requires little pressing force. The present invention therefore overcomes the shortcomings of the conventional pierce nut, contributing greatly to the industry in question.

## Claims

1. A pierce nut comprising:
a cylindrical nut body (1) having an internally threaded bore (2) formed therein;
an external annular projection (3) extending longitudinally from an end of the body and having an inner surface formed as an inclined side wall (7) conically tapered outward and having turning-preventing formations;
an internal cylindrical projection (4) extending longitudinally from an end of the body and with an end surface projecting further than an end of the external projection, and
an annular groove (5) provided between the projections and on a bottom surface of the cylindrical nut body;
in which nut said turning-preventing formations formed on the external projection are constituted by a continuous ring of serrations of V-shaped cross-section longitudinally extending along the inclined side wall (7) from the mouth of said annular groove (5).

2. A pierce nut according to claim 1, wherein turning-preventing notches (6) are formed radially on the bottom surface of the end of the external projection (3).

3. A pierce nut according to claim 1, wherein the inclined side wall (7) is inclined at an angle of 10 to 30°.

## Patentansprüche

1. Stanzmutter, bestehend aus:
einem zylindrischen Mutterkörper (1) mit einer darin ausgebildeten Bohrung (2) mit Innengewinde;
einem äußeren ringförmigen Vorsprung (3), der in Längsrichtung von einem Ende des Körpers verläuft und eine Innenfläche aufweist, die als eine geneigte Seitenwand (7) ausgebildet ist, welche konisch nach außen abgeschrägt ist und ein Drehen verhindernde Ausbildungen aufweist;
einem inneren zylindrischen Vorsprung (4), der in Längsrichtung von einem Ende des Körpers verläuft, wobei eine Endfläche weiter vorsteht als ein Ende des äußeren Vorsprunges; und
einer ringförmigen Nut (5), die zwischen den Vorsprüngen und auf einer Bodenfläche des zylindrischen Mutterkörpers vorgesehen ist;
wobei die ein Drehen verhindernden Ausbildungen, die bei der Mutter an dem äußeren Vorsprung geformt sind, durch einen kontinuierlichen Ring von Sägezahneinschnitten mit V-förmigem Querschnitt gebildet sind, die in Längsrichtung entlang der geneigten Seitenwand (7) von dem Mund der ringförmigen Nut (5) verlaufen.

2. Stanzmutter nach Anspruch 1, bei welcher ein Drehen verhindernde Kerben (6) radial auf der Bodenfläche des Endes des äußeren Vorsprunges (3) ausgebildet sind.

3. Stanzmutter nach Anspruch 1, bei welcher die geneigte Seitenwand (7) unter einem Winkel von 10° bis 30° geneigt ist.

## Revendications

1. Ecrou de perçage comprenant :
un corps d'écrou cylindrique (1) dans lequel est formé un perçage (2) fileté intérieurement ;
une saillie annulaire extérieure (3), s'étendant longitudinalement en partant d'une extrémité du corps et ayant une surface intérieure réalisée sous la forme d'une paroi latérale inclinée (7) se rétrécissant en cône vers l'extérieur et munie d'éléments de freinage de rotation ;
une extension cylindrique intérieure (4), s'étendant longitudinalement en partant d'une extrémité du corps et munie d'une surface d'extrémité qui se projette au-delà de l'extrémité de la saillie extérieure, et
une gorge annulaire (5), prévue entre la saillie annulaire et la surface inférieure du corps d'écrou cylindrique ;
et dans lequel lesdits éléments de freinage formés sur la saillie extérieure, sont constitués par une couronne continue de dents à section transversale en V, qui s'étendent longitudinalement le long de la paroi latérale inclinée (7), en partant de l'ouverture de la gorge annulaire (5).

2. Ecrou de perçage selon la revendication 1, dans lequel des encoches (6) de freinage de rotation sont formées radialement sur la surface inférieure de l'extrémité de la saillie extérieure (3).

3. Ecrou de perçage selon la revendication 1, dans lequel la paroi (7) est inclinée d'un angle de 10 à 30°.
